# EUROPEAN PATENT APPLICATION

(11) **EP 4 773 251 A1**
(43) Date of publication of application: **08.07.2026**
(21) Application number: 25816576.0
(22) Date of filing: 22.04.2025
(51) Int. Cl.: H01M 4/62, H01M 4/525, H01M 4/505, H01M 10/052, H01M 10/0567, H01M 10/0569, H01M 4/583, H01M 4/48, H01M 4/02

(54) **POSITIVE ELECTRODE FOR LITHIUM SECONDARY BATTERY COMPRISING POSITIVE ELECTRODE ADDITIVE**

(30) Priority: 28.05.2024 KR 20240069470; 21.04.2025 KR 20250051933
(71) Applicant: LG Energy Solution, Ltd., Seoul 07335 (KR)
(72) Inventor: YEOM, Chul Eun, Daejeon 34122 (KR); LEE, Jung Min, Daejeon 34122 (KR); JI, Su Hyeon, Daejeon 34122 (KR); KO, Jin Hyuck, Daejeon 34122 (KR); LEE, Chul Haeng, Daejeon 34122 (KR)
(74) Representative: Hoffmann Eitle
(86) International application number: PCT/KR2025/095269
(87) International publication number: WO 2025/249990

(57) **Abstract**

A positive electrode of a secondary battery includes: a positive electrode active material layer, which in turn includes a positive electrode active material, a conductive material, a binder, and a positive electrode additive. The positive electrode additive includes substituents with a cyclic sulfonic ester (sultone) or cyclic sulfate structure, so that the oxygen release from a positive electrode active material is suppressed, which improves the structural stability of the positive electrode active material.

## Description

### TECHNICAL FIELD

The present disclosure relates to a positive electrode including a positive electrode additive.

### BACKGROUND ART

Recently, as the application areas of lithium secondary batteries have rapidly expanded to the storage and supply of power for large-sized devices such as automobiles and power storage systems, as well as the supply of power for electricity, electronics, communication, and electronic devices such as computers, there is an increasing demand for high-capacity, high-power, and high-stability secondary batteries.

When lithium secondary batteries are used continuously for an extended period of time or left under a high temperature environment, a gas occurs, causing a safety problem such as a swelling phenomenon that the thickness of the batteries increases, which is recognized as one of important issues that should be addressed to implement the high-capacity and high-power lithium secondary batteries.

### DISCLOSURE OF THE INVENTION

### TECHNICAL PROBLEM

The present disclosure provides a positive electrode including a positive electrode additive capable of forming a reinforced electrolyte-electrode film.

Further, the present disclosure provides a lithium secondary battery that exhibits a superior long-term durability even when operating at a high voltage for improving the energy density of the lithium secondary battery.

### TECHNICAL SOLUTION

A positive electrode of the present disclosure includes a positive electrode active material layer, the positive electrode active material layer includes a positive electrode active material, a conductive material, a binder, and a positive electrode additive, and the positive electrode additive includes at least one of a compound of Formula 1 and a compound of Formula 2: 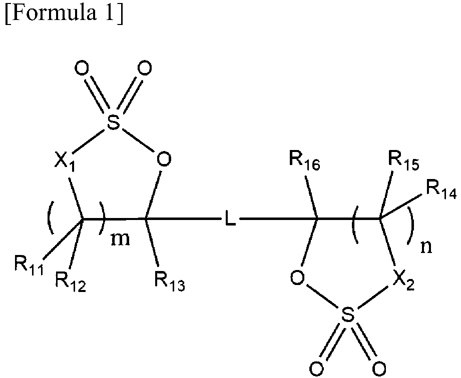
wherein X₁ and X₂ are each independently *-O-* or *-C(R_{X1})(R_{X2})-*, R₁₁, R₁₂, R₁₃, R₁₄, R₁₅, R₁₆, R_{X1}, and R_{X2} are each independently any one selected from H, F, and an alkyl group with carbon numbers 1 to 5, L is any one selected from a direct bond, a bivalent organic group represented by Formula 1-1, and a bivalent organic group represented by Formula 1-2, m and n are each independently 1 or 2, and * is a bonding site, 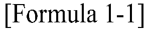 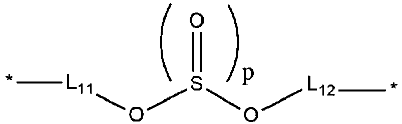
wherein L₁₁ and L₁₂ are each independently a direct bond, or an alkylene group with carbon numbers 1 to 5, which is capable of being substituted with one or more fluorines, or an alkylene group with carbon numbers 1 to 3, which is capable of being substituted with one or more fluorines, p is 1 or 2, and * is a bonding site, 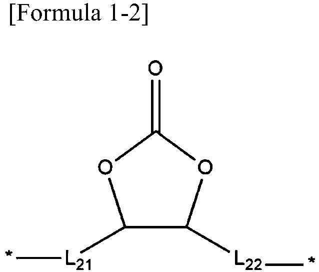
wherein L₂₁ and L₂₂ are each independently a direct bond or an alkylene group with carbon numbers 1 to 5, which is capable of being substituted with one or more fluorines, and * is a bonding site, 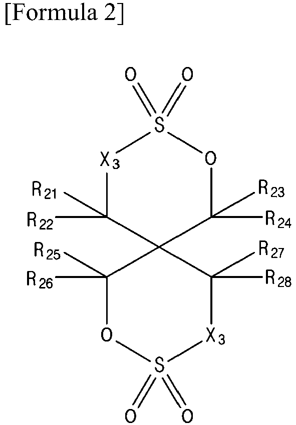
wherein X₃ and X₄ are each independently *-O-* or *-C(Rx₃)(Rx₄)-*, R₂₁, R₂₂, R₂₃, R₂₄, R₂₅, R₂₆, R₂₇, R₂₈, R_{X3}, and R_{X4} are each independently any one selected from H, F, and an alkyl group with carbon numbers 1 to 5, and * is a binding site.

A lithium secondary battery of the present disclosure includes: the positive electrode described above; a negative electrode; and an electrolyte.

### ADVANTAGEOUS EFFECTS

The positive electrode additive of Formula 1 and/or Formula 2, which is included in the positive electrode according to the present disclosure, includes substituents with a cyclic sulfonic ester (sultone) or cyclic sulfate structure, so that a robust high-durability positive electrode-electrolyte interface may be formed at the positive electrode. For example, the compound of Formula 1 or Formula 2, which is the positive electrode additive directly added into the positive electrode, reacts with a lithium byproduct on the surface of the positive electrode, and a ring opening reaction occurs at sulfur-containing rings in the additive of Formula 1 or Formula 2, forming a film on the surface of the positive electrode.

As a result, the release of oxygen from a positive electrode active material is suppressed, which improves the structural stability of the positive electrode active material. Thus, the secondary battery including the positive electrode according to the present disclosure has the excellent cycle characteristics. Further, a side reaction of electrolyte on the surface of the positive electrode is suppressed, which reduces the gas generation. Further, lithium by-products present on the surface of the positive electrode active material are removed, and thus, a side reaction with the electrolyte is suppressed, so that the effect of the reduction of gas generation is achieved.

The positive electrode additive of Formula 1 or Formula 2 included in the positive electrode of the present disclosure includes, in its structure, two or more substituents with the cyclic sulfonic ester (sultone) or cyclic sulfate structure. Thus, the positive electrode including the positive electrode additive of the present disclosure does not experience the loss caused by, for example, vaporization even throughout the electrode process.

As a result, when the positive electrode of the present disclosure operates in a finished lithium secondary battery, a sufficiently durable positive electrode-electrolyte interface may be formed.

Therefore, the positive electrode according to the present disclosure may be applied to a lithium secondary battery, to improve the overall performance of the lithium secondary battery.

### BRIEF DESCRIPTION OF THE DRAWINGS

Since the drawings attached herewith illustrate embodiments of the present disclosure and serve to facilitate the understanding of the technical idea of the present disclosure in conjunction with the detailed description of the invention herein below, the present disclosure should not be construed as being limited to the matters illustrated in the drawings.
FIG. 1 illustrates a structure of a lithium secondary battery according to an embodiment of the present disclosure.
FIG. 2 is a view illustrating a vehicle including a battery pack constituted with the lithium secondary battery of FIG. 1.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### BEST MODE FOR CARRYING OUT THE INVENTION

Words and terms used in the detailed description and the claims herein should not be interpreted to be limited to their usual or dictionary meanings, but should be interpreted to have meanings and concepts that correspond to the technical idea of the present disclosure in compliance with the principle that inventors may appropriately define terms and concepts for the purpose of best describing the present disclosure.

In the descriptions herein below, terms such as "comprise," "include," and "have" are intended to designate the presence of features, numerals, steps, components, or combinations thereof that have been implemented, but should not be interpreted to exclude the presence or possible addition of one or more other features, numerals, steps, components, or combinations thereof.

In the expression "carbon numbers a to b" used herein below, "a" and "b" each refer to the number of carbon atoms included in a specific functional group. That is, the functional group may include "a" to "b" carbon atoms. For example, an "alkylene group with carbon numbers 1 to 5" indicates an alkylene group having 1 to 5 carbon atoms such as -CH₂-, -CH₂CH₂-, -CH₂CH₂CH₂-, -CH₂(CH₃)CH-, -CH(CH₃)CH₂-, or - CH(CH₃)CH₂CH₂-.

In the descriptions herein, all alkyl groups may be substituted or unsubstituted. Unless otherwise defined, the term "substituted" indicates that at least one hydrogen bonded to a carbon is substituted with an element other than hydrogen, for example, a halogen atom, a nitro group, or a nitrile group.

In lithium secondary batteries for vehicles, the high-capacity, high-power, and long-life characteristics are becoming increasingly important. Accordingly, in order to ensure the high capacity of a secondary battery, a positive electrode active material containing nickel in a high content for high energy density but low stability may be used, or the secondary battery may be operated at a high voltage.

However, when the secondary battery is operated at the high voltage to achieve the high capacity of the secondary battery, the electrolyte in the secondary battery may degrade as the charge and discharge progress. The degradation of the secondary battery tends to accelerate when the potential of the positive electrode increases, or the battery is exposed to a high temperature.

Further, when the lithium secondary battery is used continuously for an extended period of time or left under a high temperature environment, a gas occurs, causing a so-called swelling phenomenon that the thickness of the battery increases, and the occurring gas may be a result of a side reaction of the electrolyte.

In consideration of the circumstances, the present disclosure provides a lithium secondary battery exhibiting an excellent long-term durability even when operating at a high voltage.

Hereinafter, the present disclosure will be described in more detail.

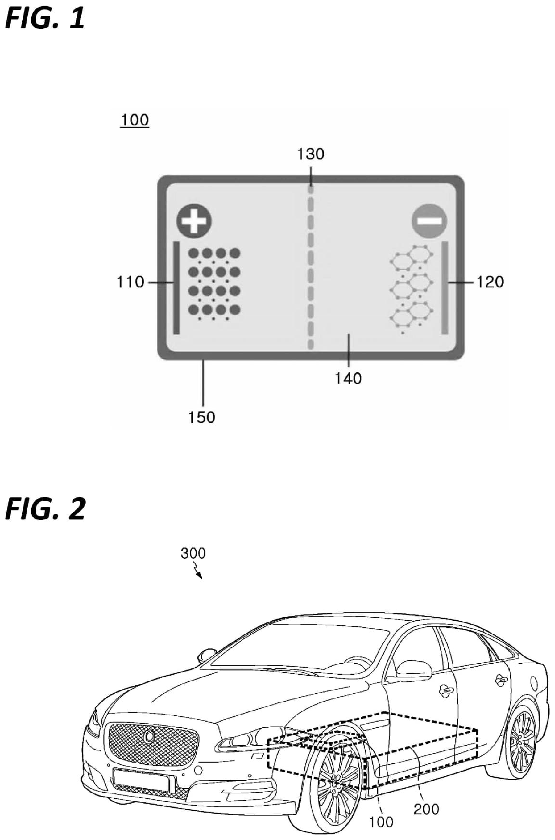

Referring to FIG. 1, a lithium secondary battery 100 according to an embodiment of the present disclosure includes an electrode assembly including a positive electrode 110, a negative electrode 120 opposite the positive electrode 110, a separator 130 interposed between the positive electrode 110 and the negative electrode 120, a non-aqueous electrolyte 140, and a battery case 150 accommodating the electrode assembly and the non-aqueous electrolyte 140.

The lithium secondary battery 100 may be manufactured by accommodating the electrode assembly in the battery case 150, and then, injecting the non-aqueous electrolyte 140 thereinto.

The lithium secondary battery 100 according to an embodiment of the present disclosure may be manufactured, for example, in a prismatic type, a pouch type, a coin type, or a cylindrical type depending on its manufactured shape.

The positive electrode 110 of the present disclosure includes: a positive electrode current collector; and a positive electrode active material layer formed on the positive electrode current collector, and the positive electrode active material layer includes a positive electrode active material, a conductive material, a binder, and a positive electrode additive.

### Positive Electrode Additive

The positive electrode additive included in the positive electrode active material layer of the present disclosure includes at least one of the compound of Formula 1 and the compound of Formula 2 below.

The compound of Formula 1 below includes substituents with the cyclic sulfonic ester (sultone) or cyclic sulfate structure at both ends, and thus, a robust high-durability positive electrode-electrolyte interface may be formed at the positive electrode 110.

For example, the compound of Formula 1, which is the positive electrode additive injected directly into the positive electrode 110, reacts with the lithium byproduct on the surface of the positive electrode 110, and a ring opening reaction occurs at sulfur-containing rings in the additive of Formula 1, forming a film on the surface of the positive electrode 110.

Further, since the positive electrode additive of Formula 1 included in the positive electrode 110 according to the present disclosure includes two or more substituents with the cyclic sulfonic ester (sultone) or cyclic sulfate structure in the structure thereof, the positive electrode 110 including the positive electrode additive of the present disclosure does not experience the loss caused by, for example, vaporization even throughout the electrode process. As a result, when the positive electrode 110 of the present disclosure operates in the finished lithium secondary battery 100, a sufficiently durable positive electrode-electrolyte interface may be formed.

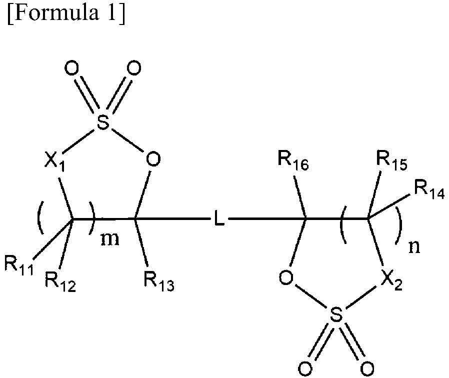

In Formula 1 above, X₁ and X₂ are each independently *-O-* or *-C(R_{X1})(R_{X2})-*. Here, * indicates a bonding site.

In Formula 1 above, R₁₁, R₁₂, R₁₃, R₁₄, R₁₅, R₁₆, R_{X1}, and R_{X2} are each independently any one selected from H, F, and an alkyl group with carbon numbers 1 to 5, or H or F.

In Formula 1 above, "m" and "n" are each independently 1 or 2, and may be 1 in view of inhibiting an excessive resistance increase caused from an increase in content of hydrocarbon of film components, and at the same time, facilitating the ring opening reaction thereby increasing the film formation rate.

In Formula 1 above, L is any one selected from a direct bond, a bivalent organic group represented by Formula 1-1 below, and a bivalent organic group represented by Formula 1-2 below.

When L is the bivalent organic group represented by Formula 1-1, the cyclic sulfonic ester (sultone) or cyclic sulfate structures at both ends are spaced apart from each other by an appropriate distance, so that the content of a sulfur component (S) in an organic film formed from the additive may be uniform. By the organic film formed from the positive electrode additive of the present disclosure in which the S content is uniform, the decomposition of an organic solvent on the surface of the positive electrode 110 is reduced, and the resistance increase at a high voltage is reduced.

Further, by including the sulfonic ester or sulfate structure in the structure of Formula 1-1, it is possible to form a film component that may be strongly adsorbed with a transition metal included in the positive electrode 110, which achieves the effect in suppressing the resistance increase over a long term.

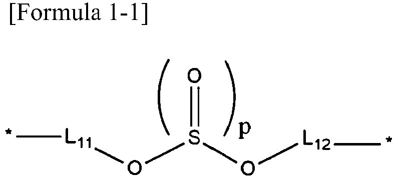

In Formula 1-1 above, L₁₁ and L₁₂ are each independently a direct bond, an alkylene group with carbon numbers 1 to 5 that may be substituted with one or more fluorines, or an alkylene group with carbon numbers 1 to 3 that may be substituted with one or more fluorines.

In Formula 1-1 above, "p" is 1 or 2, and when "p" is 2 in Formula 1-1 above, the oxidation stability at a high voltage improves, and the film ionic conductivity may improve due to unshared electron pairs of oxygen.

In Formula 1-1 above, * indicates a bonding site.

For example, Formula 1-1 above may be any one selected from bivalent organic groups of Formula 1-1a, Formula 1-1b, Formula 1-1c, and Formula 1-1d below. Here, * indicates a bonding site.

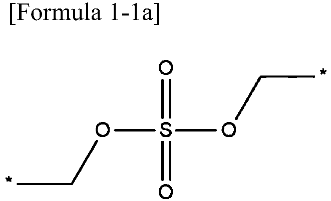

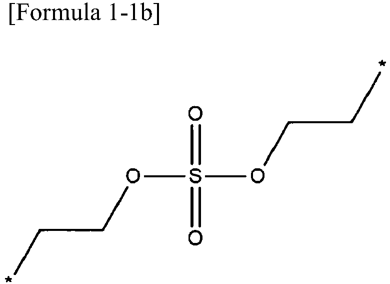

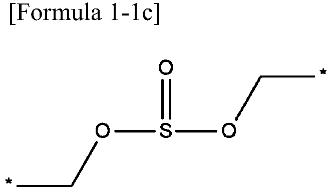

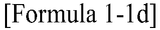

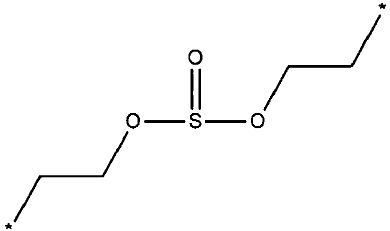

When L is the bivalent organic group represented by Formula 1-2, the cyclic sulfonic ester (sultone) or cyclic sulfate structures at both ends are spaced apart from each other by an appropriate distance, so that the S content in the organic film formed from the additive may be uniform. By the organic film formed from the positive electrode additive of the present disclosure in which the S content is uniform, the decomposition of the organic solvent on the surface of the positive electrode 110 is reduced, and the resistance increase at a high voltage is reduced.

Further, a film with a high dielectric constant is formed by a carbonate group in the structure of Formula 1-2, resulting in the advantage of high lithium-ion conductivity.

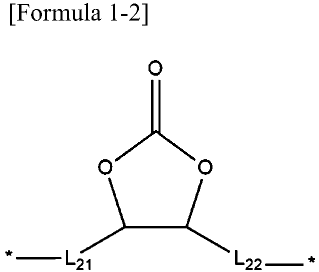

In Formula 1-2 above, L₂₁ and L₂₂ are each independently a direct bond, an alkylene group with carbon numbers 1 to 5 that may be substituted with one or more fluorines, or an alkylene group with carbon numbers 1 to 3 that may be substituted with one or more fluorines.

In Formula 1-2 above, * indicates a bonding site.

For example, Formula 1-2 above may be any one selected from bivalent organic groups of Formula 1-2a, Formula 1-2b, and Formula 1-2c below. Here, * indicates a bonding site.

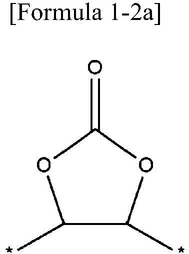

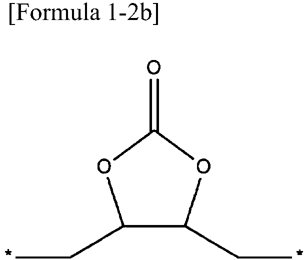

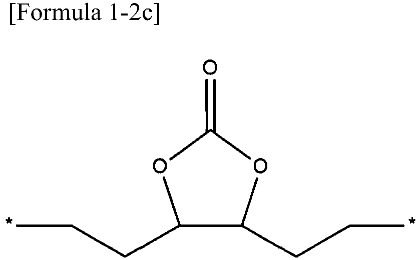

For example, the compound of Formula 1 may be any one of the compounds of Formulas 1a to 1d below.

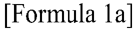

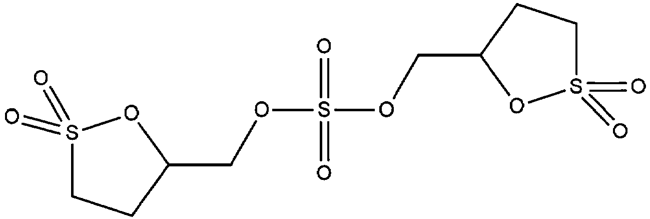

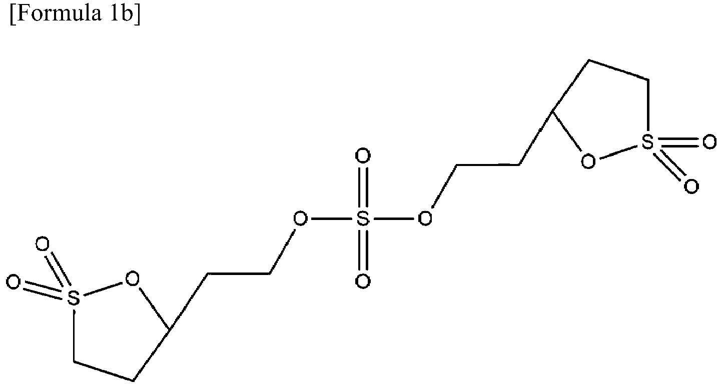

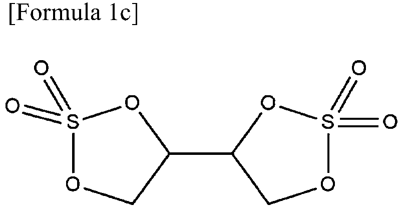

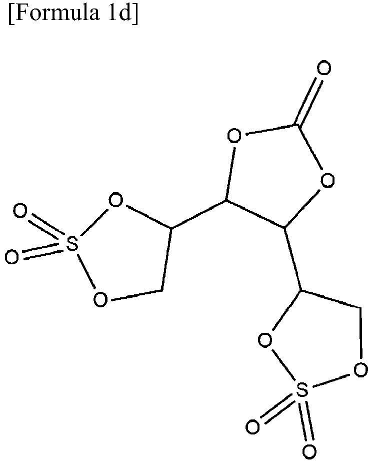

The compound of Formula 2 below has a structure in which two cyclic sulfate rings are connected to each other in the spiro form, and reacts with the lithium byproduct on the surface of the positive electrode 110 so that a ring opening reaction occurs at sulfur-containing rings in the structure, forming a polymeric film on the surface of the positive electrode 110.

Further, since the positive electrode additive of Formula 2 included in the positive electrode 110 according to the present disclosure includes two or more substituents with the cyclic sulfonic ester (sultone) or cyclic sulfate structure in the structure thereof, the positive electrode 110 including the positive electrode additive of the present disclosure does not experience the loss caused by, for example, vaporization even throughout the electrode process. As a result, when the positive electrode 110 of the present disclosure operates in the finished lithium secondary battery 100, a sufficiently durable positive electrode-electrolyte interface may be formed.

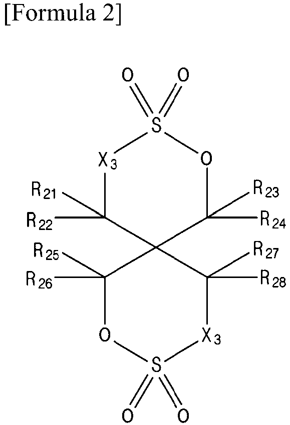

In Formula 2 above, X₃ and X₄ are each independently *-O-* or *-C(R_{X3})(R_{X4})-*. Here, * indicates a bonding site.

In Formula 2 above, R₂₁, R₂₂, R₂₃, R₂₄, R₂₅, R₂₆, R₂₇, R₂₈, R_{X3}, and R_{X4} are each independently any one selected from H, F, and an alkyl group with carbon numbers 1 to 5, or H or F.

For example, the compound of Formula 2 may be any one of the compounds of Formulas 2a to 2c below.

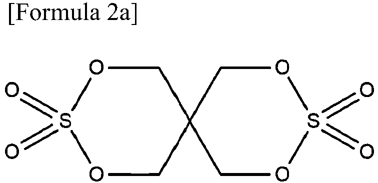

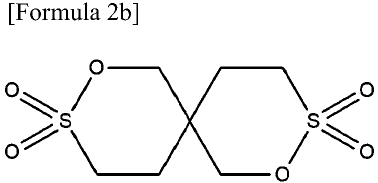

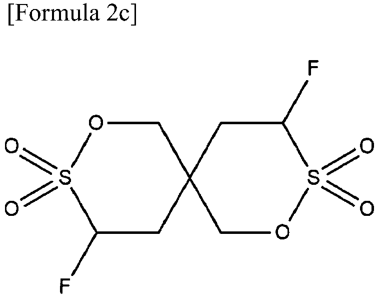

In the present disclosure, the positive electrode additive may be included in a content of 0.001 wt% to 10 wt% based on the total weight of the positive electrode active material layer, and may be included in a content of 0.005 wt% to 5 wt% or 0.01 wt% to 5 wt%. When the content of the positive electrode additive satisfies the range above, the positive electrode additive may be mixed uniformly with the positive electrode active material while maintaining an appropriate range of the battery capacity.

### Positive Electrode

The present disclosure provides the positive electrode 110 including the positive electrode additive described above.

For example, the positive electrode 110 includes a positive electrode active material layer, and the positive electrode active material layer includes a positive electrode active material, a conductive material, a binder, and the positive electrode additive described above. The positive electrode 110 may include a positive electrode current collector and a positive electrode active material layer disposed on at least one surface of the positive electrode current collector. Since the positive electrode additive has been described, the remaining components will be described below.

The positive electrode current collector may include a metal with a high conductivity, and is not particularly limited as long as it facilitates the bonding of the positive electrode active material layer thereto and is not reactive in a voltage range of the battery. The positive electrode current collector may be, for example, a stainless steel, aluminum, nickel, titanium, calcined carbon, or aluminum or a stainless steel with the surface thereof treated with, for example, carbon, nickel, titanium, or silver. The positive electrode current collector may typically have a thickness of 3 µm to 500 µm, and may have fine irregularities on the surface thereof to enhance the bond of the positive electrode active material. For example, the positive electrode current collector may be used in various forms such as a film, a sheet, foil, a net, a porous material, a foam, and nonwoven fabric.

The positive electrode active material layer may include the positive electrode active material, optionally the conductive material, and the binder as necessary, in addition to the positive electrode additive described above.

The positive electrode active material according to the present disclosure may include a lithium transition metal oxide in which the content of nickel among metal elements excluding lithium is 60 atm% or more.

The positive electrode active material is a compound capable of reversibly intercalating and deintercalating lithium, and may include a lithium metal oxide containing lithium and one or more metals such as cobalt, manganese, nickel, or aluminum. According to an embodiment, the lithium metal oxide may include, for example, lithium-manganese-based oxides (*e.g.*, LiMnO₂ and LiMn₂O₄), lithium-cobalt-based oxides (*e.g.*, LiCoO₂), lithium-nickel-based oxides (*e.g.*, LiNiO₂), lithium-nickel-manganese-based oxides (*e.g.*, LiNi_{1-Y}Mn_{Y}O₂ (where 0<Y<1) and LiMn_{2-z}Ni_{z}O₄ (where 0<Z<2)), lithium-nickel-cobalt-based oxides (*e.g.*, LiNi_{1-Y1}Co_{Y1}O₂ (where 0<Y1<1)), lithium-manganese-cobalt-based oxides (*e.g.*, LiCo_{1-Y2}Mn_{Y2}O₂ (where 0<Y2<1), LiMn_{2-z1}Co_{z1}O₄ (where 0<Z1<2)), lithium-nickel-manganese-cobalt-based oxides (*e.g.*, Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, and p1+q1+r1=2)), or lithium-nickel-cobalt-transition metal (M) oxides (*e.g.*, Li(Niₚ₂Co_{q2}Mnᵣ₂M_{S2})O₂ (where M is selected from Al, Fe, V, Cr, Ti, Ta, Mg, and Mo, and p2, q2, r2, and s2 are atomic fractions of independent elements and satisfy 0<p2<1, 0<q2<1, 0<r2<1, 0<s2<1, and p2+q2+r2+s2=1)), and may include one or more compounds thereof.

Among the compounds above, from the view point of improving the capacity characteristics and the stability of the battery, the lithium metal oxide may be, for example, LiCoO₂, LiMnO₂, LiNiO₂, a lithium nickel manganese cobalt oxide (*e.g.*, Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂), or a lithium nickel cobalt aluminum oxide (*e.g.,* Li(Ni_{0.8}Co_{0.15}Al_{0.05})O₂), and any one or a mixture of two or more thereof may be used.

Among the compounds above, the lithium transition metal oxide included in the positive electrode active material of the present disclosure may have the composition represented by Formula 3 below.

[Formula 3] LiₐNi_{1-x-y}CoₓM¹_{y}M²_{z}O₂

In Formula 3 above, M¹ may be at least one species selected from Mn and Al, and may be Mn or a combination of Mn and Al.

In Formula 3 above, M² may be at least one or two or more elements selected from Zr, Ti, Mg, Ta, Nb, W, Mo, and Cr.

The "a" represents a molar ratio of lithium in the lithium transition metal oxide, and may satisfy 1.0≤a≤1.3, 1.0≤a≤1.2, or 1.0≤a≤1.1.

The "1-x-y" represents a molar ratio of nickel among the metal elements excluding lithium in the lithium transition metal oxide, and may satisfy 0.6≤1-x-y<1.0, 0.70≤1-x-y≤0.98, or 0.80≤1-x-y≤0.95. When the content of nickel satisfies this range, the high capacity characteristics may be implemented.

The "x" represents a molar ratio of cobalt among the metal elements excluding lithium in the lithium transition metal oxide, and may satisfy 0<x<0.4, 0<x≤0.2, or 0.01≤x≤0.10.

The "y" represents a molar ratio of M¹ among the metal elements excluding lithium in the lithium transition metal oxide, and may satisfy 0<y<0.4, 0<y≤0.2, or 0.01≤y≤0.10.

The "z" represents a molar ratio of M² among the metal elements excluding lithium in the lithium transition metal oxide, and may satisfy 0≤z≤0.1 or 0≤z≤0.05.

The positive electrode 110 according to the present disclosure may include the positive electrode active material in a content of 80 wt% to 99 wt% or 85 wt% to 98.5 wt% based on the total weight of the positive electrode active material layer, and may exhibit the superior capacity characteristics when the positive electrode active material is included in the content range above.

The conductive material is used to impart a conductivity to the electrode, and may not be particularly limited as long as it has the electronic conductivity without causing chemical changes in the battery. Examples of the conductive material include graphite such as natural or artificial graphite; carbon-based materials such as carbon black, acetylene black, Ketjen black, channel black, furnace black, lamp black, thermal black, and carbon fiber; metal powder or metal fiber such as copper, nickel, aluminum, and silver; conductive tubes such as a carbon nanotube; conductive whisker such as zinc oxide and potassium titanate; conductive metal oxides such as a titanium oxide; or conductive polymers such as a polyphenylene derivative, and among these materials, one species alone or a mixture of two or more species may be used. The conductive material may be included in a content of 0.1 wt% to 15 wt% based on the total weight of the positive electrode active material layer.

The binder serves to enhance the adhesion between particles of the positive electrode active material and the bonding force between the positive electrode active material and the current collector. For example, the binder may include polyvinylidene fluoride (PVDF), a polyvinylidene fluoride-hexafluoropropylene copolymer (PVDF-co-HFP), polyvinylalcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), sulfonated-EPDM, styrene butadiene rubber (SBR), fluorine rubber, poly acrylic acid, and polymers obtained from substituting hydrogen of the materials above with Li, Na, or Ca, or various copolymers thereof, and one species alone or a mixture of two or more species thereof may be used. The binder may be included in a content of 0.1 wt% to 15 wt% based on the total weight of the positive electrode active material layer.

### Lithium Secondary Battery

The present disclosure further provides the lithium secondary battery 100 including the positive electrode 110 described above.

For example, the lithium secondary battery 100 includes the positive electrode 110, the negative electrode 120, and the electrolyte. Alternatively, according to an embodiment, the lithium secondary battery 100 includes the positive electrode 110 including a positive electrode active material, the negative electrode 120 including a negative electrode active material, the separator 130 interposed between the positive electrode 110 and the negative electrode 120, and the non-aqueous electrolyte 140 described above.

In this case, the lithium secondary battery 100 of the present disclosure may be manufactured according to common methods well-known in the art. For example, the lithium secondary battery 100 may be manufactured by sequentially stacking the positive electrode 110, the negative electrode 120, and the separator 130 between the positive electrode 110 and the negative electrode 120 to form an electrode assembly, then inserting the electrode assembly into the battery case 150, and injecting the non-aqueous electrolyte 140 according to the present disclosure thereinto.

Since the positive electrode 110 is the same as described above, only the remaining components will be described below.

The negative electrode 120 may include a negative electrode active material.

The negative electrode 120 may include a negative electrode current collector and a negative electrode active material layer disposed on at least one surface of the negative electrode current collector. The negative electrode active material layer may include the negative electrode active material described above. The negative electrode active material layer may further include at least one of a binder and a conductive material, in addition to the negative electrode active material.

For example, the negative electrode 120 may be manufactured by coating, on the negative electrode current collector, a negative electrode mixture slurry containing, for example, a negative electrode active material, a binder, a conductive material, and a solvent, or a graphite electrode made of carbon (C) or a metal itself may be used as the negative electrode 120.

For example, when the negative electrode 120 is manufactured by coating the negative electrode mixture slurry on the negative electrode current collector, the negative electrode current collector generally has a thickness of 3 µm to 500 µm. The negative electrode current collector is not particularly limited as long as it has the high conductivity without causing chemical changes in the battery, and examples thereof include copper, a stainless steel, aluminum, nickel, titanium, calcined carbon, copper or a stainless steel with the surface thereof treated with, for example, carbon, nickel, titanium, or silver, and aluminum-cadmium alloys. Similarly to the positive electrode current collector, the negative electrode current collector may also have fine irregularities on the surface thereof to enhance the bonding force of the negative electrode active material, and may be used in various forms such as a film, a sheet, foil, a net, a porous material, a foam, and nonwoven fabric.

Further, the negative electrode active material may include at least one selected from a lithium metal, a carbon material capable of reversibly intercalating/deintercalating lithium ions, metals or alloys of the metals and lithium, a metal composite oxide, a material capable of doping and de-doping lithium, and a transition metal oxide.

As for the carbon material capable of reversibly intercalating/deintercalating lithium ions, any carbon-based negative electrode active material commonly used in lithium ion secondary batteries may be used without particular limitation, and examples thereof include crystalline carbon, amorphous carbon, and a combination thereof. Examples of the crystalline carbon include graphite such as natural or artificial graphite in an amorphous, plate, flake, spherical, or fibrous form, and examples of the amorphous carbon include soft carbon (low temperature calcined carbon) or hard carbon, mesoporous pitch carbide, and calcined coke.

The metal composite oxide may be one selected from PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤x≤1), LiₓWO₂ (0≤x≤1), and SnₓMe₁₋ₓMe'_{y}O_{z} (Me: Mn, Fe, Pb, Ge; Me': Al, B, P, Si; the elements of Groups 1, 2, and 3 of the periodic table, halogen; 0<x≤1; 1≤y≤3; 1≤z≤8).

The material capable of doping and de-doping lithium may be, for example, Si, SiOₓ (0<x≤2), a silicon-carbon composite (Si-C composite), a Si-Y alloy (where Y is an element selected from alkali metals, alkaline earth metals, the elements of Groups 13 and 14, transition metals, rare earth elements, and combinations thereof, but is not Si), Sn, SnO₂, or Sn-Y (where Y is an element selected from alkali metals, alkaline earth metals, the elements of Groups 13 and 14, transition metals, rare earth elements, and combinations thereof, but is not Sn), or a mixture of at least one of these materials and SiO₂ may be used. The element Y may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and combinations thereof.

The transition metal oxide may be, for example, a lithium-containing titanium composite oxide (LTO), a vanadium oxide, or a lithium vanadium oxide.

Among the materials, the negative electrode active material may include at least one of graphite and SiOₓ (0≤x<2). For example, the negative electrode active material may include graphite and SiOₓ (0≤x<2). When the negative electrode active material includes graphite and SiOₓ (0≤x<2), the graphite and SiOₓ (0≤x<2) may be included in a weight ratio of 99:1 to 70:30 from the view point of increasing the capacity of the lithium secondary battery 100.

The negative electrode active material may be included in a content of 60 wt% to 99 wt%, 70 wt% to 99 wt%, or 80 wt% to 98 wt% based on the total weight of the solids in the negative electrode mixture slurry.

The binder is a component that aids the bonding between the conductive material, the active material, and the current collector. Examples of the binder include polyvinylidene fluoride (PVDF), polyvinyl alcohol, starch, hydroxypropyl cellulose, regenerated cellulose, polyvinylpyrrolidone, polytetrafluoroethylene, polyethylene, polypropylene, an ethylene-propylene-diene monomer, a sulfonated ethylene-propylene-diene monomer, styrene-butadiene rubber, fluorine rubber, and various copolymers thereof. For example, in consideration of a high thickening property, styrene-butadiene rubber (SBR)-carboxymethylcellulose (CMC) may be used.

Typically, the binder may be included in a content of 1 wt% to 20 wt%, 1 wt% to 15 wt%, or 1 wt% to 10 wt% based on the total weight of the solids excluding the solvent in the negative electrode mixture slurry.

The conductive material is a component that further improves the conductivity of the negative electrode active material. The conductive material is not particularly limited as long as it has the conductivity without causing chemical changes in the battery, and examples thereof include carbon powder such as carbon black, acetylene black, Ketjen black, channel black, furnace black, lamp black, and thermal black; graphite powder such as natural graphite, artificial graphite, and graphite with a highly developed crystal structure; conductive fiber such as carbon fiber and metal fiber; fluorinated carbon powder; conductive powder such as aluminum powder and nickel powder; conductive whisker such as zinc oxide and potassium titanate; conductive metal oxides such as a titanium oxide; and conductive substances such as polyphenylene derivatives.

The conductive material may be included in a content of 1 wt% to 20 wt%, 1 wt% to 15 wt%, or 1 wt% to 10 wt% based on the total weight of the solids excluding the solvent in the negative electrode mixture slurry.

The solvent may include water or an organic solvent such as N-methyl-2-pyrrolidone (NMP), and may be used in an amount that achieves a desirable viscosity when the negative electrode active material, optionally, for example, the binder and the conductive material are included. For example, the solvent may be included in an amount such that the concentration of the solids including the negative electrode active material, optionally, the binder and the conductive material becomes 50 wt% to 95 wt% or 70 wt% to 90 wt%.

When a metal itself is used, the negative electrode 120 may be manufactured by physically bonding, rolling, or depositing the metal onto a metal thin film itself or the negative electrode current collector. The depositing method may use an electrical deposition or a chemical vapor deposition for the metal.

The metal bonded/rolled/deposited onto the metal thin film itself or the negative electrode current collector may include, for example, one metal or an alloy of two metals selected from lithium (Li), nickel (Ni), tin (Sn), copper (Cu), and indium (In).

The separator 130 may be a porous polymer film commonly used as a separator in related art, for example, a porous polymer film made of a polyolefin-based polymer such as an ethylene homopolymer, a propylene homopolymer, an ethylene/butene copolymer, an ethylene/hexene copolymer, and an ethylene/methacrylate copolymer, which may be used alone or in a laminated form. Alternatively, the separator 130 may be a common porous nonwoven fabric, for example, a nonwoven fabric made of a glass fiber with a high melting point or a polyethylene terephthalate fiber, but is not limited thereto. Further, in order to ensure the heat resistance or mechanical strength, a coated separator containing a ceramic component or a polymer material may be used selectively in a single-layer or multi-layer structure.

For example, the separator 130 included in the electrode assembly of the present disclosure may be a safety reinforced separator (SRS) in which a coating layer containing a ceramic component or a polymer material is formed to ensure the heat resistance or the mechanical strength.

Alternatively, the separator 130 included in the electrode assembly of the present disclosure may include a porous separator substrate and a porous coating layer coated entirely on one or both surfaces of the separator substrate, and the coating layer may include a mixture of inorganic particles selected from a metal oxide, a semi-metal oxide, a metal fluoride, a metal hydroxide, and combinations thereof, and a binder polymer that connects and immobilizes the inorganic particles.

The coating layer may include, as the inorganic particles, one or more species selected from Al₂O₃, SiO₂, TiO₂, SnO₂, CeO₂, MgO, NiO, CaO, ZnO, ZrO₂, Y₂O₃, SrTiO₃, BaTiO₃, Mg(OH)₂, and MgF. Here, the inorganic particles may improve the thermal stability of the separator 130. That is, the inorganic particles may prevent or suppress the shrinkage of the separator 130 at a high temperature. The binder polymer may improve the mechanical stability of the separator 130 by immobilizing the inorganic particles.

The electrolyte used in the present disclosure may be, for example, an organic liquid electrolyte, an inorganic liquid electrolyte, a solid polymer electrolyte, a gel-type polymer electrolyte, a solid inorganic electrolyte, or a molten inorganic electrolyte, but is not limited thereto.

The electrolyte may include a lithium salt, an organic solvent, and an electrolyte additive.

The lithium salt included in the non-aqueous electrolyte 140 of the present disclosure is used as an electrolyte salt in the lithium secondary battery 100, which is a medium for transferring ions. Typically, the lithium salt includes, for example, Li⁺ as positive ions, and includes, as negative ions, at least one selected from F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, and SCN⁻.

For example, the lithium salt may include a single substance or a mixture of two or more substances selected from LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN(SO₂F)₂ (lithium bis(fluorosulfonyl)imide; LiFSI), LiN(SO₂CF₂CF₃)₂ (lithium bis(perfluoroethenesulfonyl)imide; LiBETI), and LiN(SO₂CF₃)₂ (lithium bis(trifluoromethanesulfonyl)imide; LiTFSI). Other lithium salts commonly used for the electrolyte of the lithium secondary battery 100 may be used without limitation.

The concentration of the lithium salt may be appropriately changed in a generally allowable range, but in order to achieve an optimal effect in forming a film for preventing the corrosion of the electrode surface, the lithium salt may be contained in the electrolyte at a concentration of 0.5 M to 3 M, 0.5 M to 2.5 M, or 0.8 M to 2 M. When the concentration of the lithium salt satisfiesthis range, a sufficient effect may be achieved in improving the cycle characteristics during the storage of the lithium secondary battery 100 at a high temperature, and the viscosity of the non-aqueous electrolyte 140 becomes appropriate, which improves the electrolyte impregnation.

The organic solvent included in the non-aqueous electrolyte 140 of the present disclosure may include at least one organic solvent selected from a cyclic carbonate-based organic solvent, a linear carbonate-based organic solvent, a linear ester-based organic solvent, and a cyclic ester-based organic solvent.

For example, the organic solvent may include a cyclic carbonate-based organic solvent, a linear carbonate-based organic solvent, or a mixed organic solvent thereof.

The cyclic carbonate-based organic solvent is an organic solvent having a high viscosity and a high dielectric constant, which may dissociate the lithium salt in the electrolyte well. The cyclic carbonate-based organic solvent may include at least one organic solvent selected from ethylene carbonate (EC), propylene carbonate (PC), 1,2-butylene carbonate, 2,3-butylene carbonate, 1,2-pentylene carbonate, 2,3-pentylene carbonate, and vinylene carbonate, and may include ethylene carbonate among these organic solvents.

The linear carbonate-based organic solvent is an organic solvent having a low viscosity and a low dielectric constant, and may include at least one organic solvent selected from, for example, dimethyl carbonate (DMC), diethyl carbonate (DEC), dipropyl carbonate, ethyl methyl carbonate (EMC), methylpropyl carbonate, and ethyl propyl carbonate, and may include ethylmethyl carbonate (EMC).

In order to prepare an electrolyte having a high ionic conductivity, the organic solvent may further include at least one ester-based organic solvent selected from a linear ester-based organic solvent and a cyclic ester-based organic solvent, in addition to at least one carbonate-based organic solvent selected from the cyclic carbonate-based organic solvent and the linear carbonate-based organic solvent.

The linear ester-based organic solvent may include at least one organic solvent selected from methyl acetate, ethyl acetate, propyl acetate, methyl propionate, ethyl propionate, propyl propionate, and butyl propionate.

The cyclic ester-based organic solvent may include at least one organic solvent selected from γ-butyrolactone, γ-valerolactone, γ-caprolactone, σ-valerolactone, and ε-caprolactone.

Meanwhile, the organic solvent may additionally use an organic solvent commonly used for the non-aqueous electrolyte 140 without limitation, as necessary. For example, the organic solvent may additionally include at least one organic solvent among an ether-based organic solvent, a glyme-based solvent, and a nitrile-based organic solvent.

The ether-based solvent may be any one or a mixture of two or more selected from dimethyl ether, diethyl ether, dipropyl ether, methylethyl ether, methylpropyl ether, ethylpropyl ether, 1,3-dioxolane (DOL), and 2,2-bis(trifluoromethyl)-1,3-dioxolane (TFDOL), but is not limited thereto.

The glyme-based has a high dielectric constant and a low surface tension compared to the linear carbonate-based organic solvent, and has a low reactivity with metals. The glyme-based solvent may include at least one selected from dimethoxyethane (glyme, DME), diethoxyethane, diglyme, triglyme, and tetraglyme (TEGDME), but is not limited thereto.

The nitrile-based solvent may be at least one species selected from acetonitrile, propionitrile, butyronitrile, valeronitrile, caprylonitrile, heptanitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

In order to prevent or suppress the non-aqueous electrolyte 140 from decomposing in a high-power environment, which causes a collapse of the negative electrode 120, and further enhance the low-temperature high-rate discharge characteristics, the high temperature stability, and the effects of overcharge prevention or suppression and suppression of battery swelling at a high temperature, the non-aqueous electrolyte 140 of the present disclosure may include a well-known electrolyte additive, as necessary.

This electrolyte additive may include, for example, at least one SEI film formation additive selected from a cyclic carbonate-based compound, a sultone-based compound, a sulfate-based compound, a phosphate-based compound, a phosphite-based compound, a borate-based compound, a nitrile-based compound, a benzene-based compound, an amine-based compound, a silane-based compound, and a lithium salt-based compound.

The cyclic carbonate-based compound may be vinylene carbonate (VC), vinylethylene carbonate, or fluoroethylene carbonate.

The sultone-based compound may be at least one compound selected from 1,3-propanesultone (PS), 1,4-butanesultone, ethenesultone, 1,3-propenesultone (PRS), 1,4-butenesultone, and 1-methyl-1,3-propenesultone.

The sulfate-based compound may be ethylene sulfate (Esa), trimethylene sulfate (TMS), or methyl trimethylene sulfate (MTMS).

The phosphate-based compound or the phosphite-based compound may be at least one compound selected from lithium difluoro(oxalato)phosphate (LiDFOP), lithium difluoro(bisoxalato)phosphate, lithium difluorophosphate, tris(trimethylsilyl) phosphate, tris(trimethylsilyl) phosphite, tris(2,2,2-trifluoroethyl) phosphate, and tris(2,2,2-trifluoroethyl) phosphite.

The borate-based compound may be tetraphenylborate, lithium oxalyldifluoroborate (LiODFB), or lithium bisoxalatoborate (LiB(C₂O₄)₂, LiBOB).

The nitrile-based compound may beat least one compound selected from succinonitrile, adiponitrile, acetonitrile, propionitrile, butyronitrile, valeronitrile, caprylonitrile, heptanitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may be fluorobenzene, the amine-based compound may be, for example, triethanolamine or ethylenediamine, and the silane-based compound may be tetravinylsilane.

The lithium salt-based compound is different from the lithium salt contained in the non-aqueous electrolyte 140, and may be, for example, LiPO₂F₂ or LiBF₄.

Among the electrolyte additives described above, in a case of including at least one selected from vinylene carbonate (VC), vinyl ethylene carbonate (VEC), fluoro ethylene carbonate (FEC), propane sultone (PS), propene sultone (PRS), ethylene sulfate (Esa), LiBF₄, lithium difluoro phosphate (LiDFP), lithium difluoro oxalato borate (LiODFB), lithium bis(oxalato) borate (LiBOB), lithium difluoro oxalato phosphate (LiDFOP), and propargyl-1H-imidazole-1-carboxylate, a more robust SEI film may be formed on the surface of the negative electrode 120 during the initial activation process of the secondary battery, and it is possible to suppress the generation of gas that may occur due to the decomposition of electrolyte at a high temperature, so that the high-temperature stability of the secondary battery may be improved.

Meanwhile, the electrolyte additives described above may be used in a mixture of two or more, and may be included in a content of 0.1 wt% to 10 wt%, 0.2 wt% to 8 wt%, or 0.5 wt% to 8 wt% based on the total weight of the non-aqueous electrolyte 140. When the content of the electrolyte additive satisfies the range above, more superior effects are achieved in improving the ionic conductivity and the cycle characteristics.

The shape of the lithium secondary battery 100 of the present disclosure is not particularly limited, but may be, for example, a cylindrical shape using a can, a prismatic shape, a pouch shape, or a coin shape.

The lithium secondary battery 100 according to the present disclosure may be applied not only to a battery cell used as a power source of small devices, but also to a unit cell for medium- to large-sized battery modules including multiple battery cells.

Examples of the medium- and large-sized devices include electric vehicles, hybrid electric vehicles, plug-in hybrid electric vehicles, and power storage systems, but are not limited thereto.

### MODE FOR CARRYING OUT THE INVENTION

Hereinafter, Examples of the present disclosure will be described in detail, to enable one of ordinary skill in the art of the present disclosure to easily practice the invention. However, the present disclosure may be implemented in various different forms, and is not limited to the Examples described below.

### Examples

### Example 1

Mixed in an NMP solvent were 96.6 wt% of LiNi_{0.6}Co_{0.1}Mn_{0.3}O₂ as a positive electrode active material, 1.5 wt% of carbon black Super P as a conductive material, 1.5 wt% of polyvinylidene fluoride (PVDF) as a binder, and 0.4 wt% of the compound of Formula 1a below as a positive electrode additive, to prepare a positive electrode slurry (solid content: 75 wt%). The positive electrode slurry was applied to one surface of an aluminum current collector, dried under vacuum at 110 °C for 12 hours, and then, rolled to prepare a positive electrode.

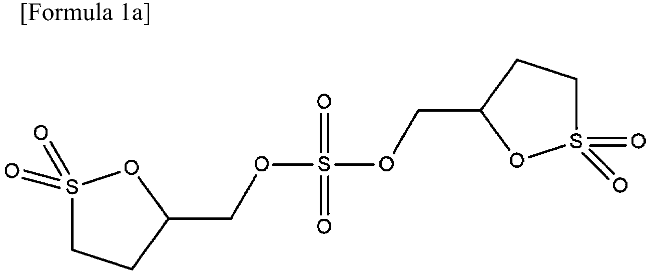

A negative electrode active material (graphite:SiO=90.0:10.0 in weight ratio):a conductive material (carbon black):a binder (styrene-butadiene rubber (SBR)-carboxymethylcellulose (CMC)) were added to a solvent N-methyl-2-pyrrolidone (NMP) in a weight ratio of 97.6:0.8:1.6 to prepare a negative electrode slurry (solid content: 60 wt%). The negative electrode slurry was applied to one surface of a negative electrode current collector (Cu thin film) with a thickness of 6 µm, dried, and roll-pressed to prepare a negative electrode. A polypropylene separator was interposed between the positive electrode and the negative electrode, to fabricate an electrode assembly.

In a dry room, a polyolefin-based porous separator coated with inorganic particles Al₂O₃ was interposed between the prepared positive and negative electrodes, to fabricate the electrode assembly.

A lithium salt of LiPF₆ and vinylene carbonate (VC) as an additive were injected into an organic solvent obtained by mixing ethylene carbonate (EC), ethyl methyl carbonate (EMC), and diethyl carbonate (DEC) in a volume ratio of 2:7:1, such that the lithium salt was contained at a concentration of 1.2 M, and the additive was contained at a concentration of 0.5 wt%, to prepare an electrolyte.

The electrode assembly is disposed inside a case, and the prepared electrolyte is injected into the case, to manufacture a lithium secondary battery.

### Example 2

A lithium secondary battery was manufactured in the same manner as in Example 1, except that 96.6 wt% of LiNi_{0.6}Co_{0.1}Mn_{0.3}O₂ as a positive electrode active material, 1.5 wt% of carbon black Super P as a conductive material, 1.5 wt% of polyvinylidene fluoride (PVDF) as a binder, and 0.4 wt% of the compound of Formula 1c below as a positive electrode additive were mixed in an NMP solvent (solid content: 75 wt%) to prepare a positive electrode slurry.

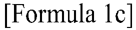

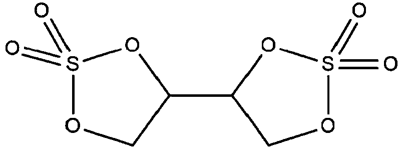

### Example 3

A lithium secondary battery was manufactured in the same manner as in Example 1, except that 96.6 wt% of LiNi_{0.6}Co_{0.1}Mn_{0.3}O₂ as a positive electrode active material, 1.5 wt% of carbon black Super P as a conductive material, 1.5 wt% of polyvinylidene fluoride (PVDF) as a binder, and 0.4 wt% of the compound of Formula 1d below as a positive electrode additive were mixed in an NMP solvent (solid content: 75 wt%) to prepare a positive electrode slurry.

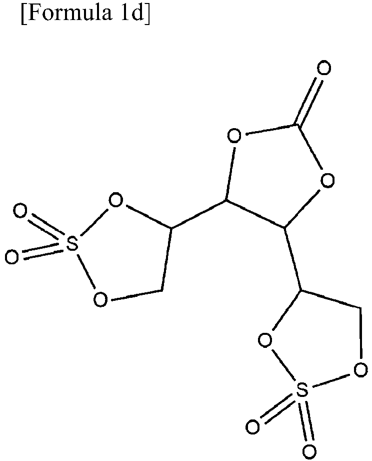

### Example 4

A lithium secondary battery was manufactured in the same manner as in Example 1, except that 96.6 wt% of LiNi_{0.6}Co_{0.1}Mn_{0.3}O₂ as a positive electrode active material, 1.5 wt% of carbon black Super P as a conductive material, 1.5 wt% of polyvinylidene fluoride (PVDF) as a binder, and 0.4 wt% of the compound of Formula 2a below as a positive electrode additive were mixed in an NMP solvent (solid content: 75 wt%) to prepare a positive electrode slurry.

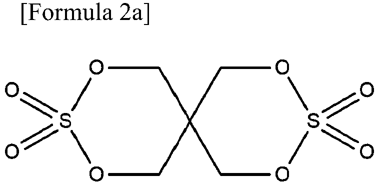

### Comparative Example 1

A lithium secondary battery was manufactured in the same manner as in Example 1, except that 97 wt% of LiNi_{0.6}Co_{0.1}Mn_{0.3}O₂ as a positive electrode active material, 1.5 wt% of carbon black Super P as a conductive material, and 1.5 wt% of polyvinylidene fluoride (PVDF) as a binder were mixed in an NMP solvent (solid content: 75 wt%) to prepare a positive electrode slurry without using a positive electrode additive.

### Comparative Example 2

Mixed in an NMP solvent were 97 wt% of LiNi_{0.6}Co_{0.1}Mn_{0.3}O₂ as a positive electrode active material, 1.5 wt% of carbon black Super P as a conductive material, and 1.5 wt% of polyvinylidenepyrrolidone (PVDF) as a binder, to prepare a positive electrode slurry (solid content: 75 wt%). The positive electrode slurry was applied to one surface of an aluminum current collector, dried under vacuum at 110 °C for 12 hours, and then, rolled to prepare a positive electrode. For example, in Comparative Example 2 as well, the positive electrode slurry was prepared without using a positive electrode additive as in Comparative Example 1.

A negative electrode active material (graphite:SiO=90.0:10.0 in weight ratio):a conductive material (carbon black):a binder (styrene-butadiene rubber (SBR)-carboxymethylcellulose (CMC)) were added to a solvent N-methyl-2-pyrrolidone (NMP) in a weight ratio of 97.6:0.8:1.6, to prepare a negative electrode slurry (solid content: 60 wt%). The negative electrode slurry was applied to one surface of a negative electrode current collector (Cu thin film) with a thickness of 6 µm, dried, and roll-pressed to prepare a negative electrode. A polypropylene separator was interposed between the positive electrode and the negative electrode, to fabricate an electrode assembly.

In a dry room, a polyolefin-based porous separator coated with inorganic particles Al₂O₃ was interposed between the prepared positive and negative electrodes, to fabricate the electrode assembly.

A lithium salt of LiPF₆, vinylene carbonate (VC) as an additive, and the compound of Formula 1a were injected into an organic solvent obtained by mixing ethylene carbonate (EC), ethyl methyl carbonate (EMC), and diethyl carbonate (DEC) in a volume ratio of 2:7:1, such that the lithium salt was contained at a concentration of 1.2 M, the additive was contained at a concentration of 0.5 wt%, and the compound of Formula 1a was contained at a concentration of 1.0 wt%.

The electrode assembly is disposed inside a case, the prepared electrolyte is injected into the case, to manufacture a lithium secondary battery.

### Comparative Example 3

A lithium secondary battery was manufactured in the same manner as in Comparative Example 2, except that LiPF₆ as a lithium salt, vinylene carbonate (VC) as an additive, and the compound of Formula 2a were injected into an organic solvent obtained by mixing ethylene carbonate (EC), ethyl methyl carbonate (EMC), and diethyl carbonate (DEC) in a volume ratio of 2:7:1, such that the lithium salt was contained at a concentration of 1.2 M, the additive was contained at a concentration of 0.5 wt%, and the compound of Formula 2a was contained at a concentration of 1.0 wt%. For example, in Comparative Example 3 as well, the positive electrode slurry was prepared without using a positive electrode additive as in Comparative Examples 1 and 2.

### Experimental Example 1-Evaluation on High-Temperature Cycle Characteristics

For each of the lithium secondary batteries manufactured in Examples 1 to 4 and Comparative Examples 1 to 3, cycle characteristics were evaluated.

For example, each of the lithium secondary batteries manufactured in Examples 1 to 4 and Comparative Examples 1 to 3 was subjected to 300 cycles of charge and discharge, each of which includes a charge to 4.2 V at 45 °C with a constant current of 0.33 C and a discharge to 2.8 V with a constant current of 0.33 C. Then, the capacity retention rate after the 300 cycles relative to the initial capacity, the resistance increase rateafter the 300 cycles relative to the initial resistance, and the gas generation amount after the 300 cycles were measured. At this time, the percentage ratio of the increased resistance to the initial resistance of the lithium secondary battery was calculated to derive the resistance increase rate after the 300 cycles.

Table 1 below provides the results.

**[Table 1]**

| | Capacity Retention Rate (%) | Resistance Increase Rate (%) | Gas Generation Amount (uL) |
|---|---|---|---|
| Example 1 | 95.3 | 18.7 | 2100 |
| Example 2 | 95.0 | 20.8 | 2300 |
| Example 3 | 94.9 | 21.3 | 2280 |
| Example 4 | 93.8 | 23.8 | 3100 |
| Comparative Example 1 | 57.8 | 54.6 | 5800 |
| Comparative Example 2 | 88.9 | 38.3 | 4200 |
| Comparative Example 3 | 86.3 | 41.8 | 5000 |

From Table 1, it may be seen that the lithium secondary batteries of Examples 1 to 4 using the positive electrode additive of the present disclosure exhibit a higher capacity retention rate, a lower resistance increase rate, and a smaller gas generation amount than those of the lithium secondary batteries of Comparative Examples 1 to 3 that do not use the positive electrode additive of the present disclosure. Therefore, the lithium secondary batteries of Examples 1 to 4 have the superior high-temperature cycle characteristics, as compared to the lithium secondary batteries of Comparative Examples 1 to 3.

### Experimental Example 2-Evaluation on High-Temperature Storage Characteristics

For each of the lithium secondary batteries manufactured in Examples 1 to 4 and Comparative Examples 1 to 3, high-temperature storage characteristics were evaluated.

For example, each of the lithium secondary batteries manufactured in Examples 1 to 4 and Comparative Examples 1 to 3 was fully charged to 4.2 V, and then, stored at 60 °C for 8 weeks. After 8 weeks, the capacity retention rate relative to the initial capacity, the resistance increase rate relative to the initial resistance, and the gas generation amount after the storage for 8 weeks were measured for the stored lithium secondary batteries.

Table 2 below provides the results.

**[Table 2]**

| | Capacity Retention Rate (%) | Resistance Increase Rate (%) | Gas Generation Rate (uL) |
|---|---|---|---|
| Example 1 | 95.9 | 21.8 | 2500 |
| Example 2 | 93.7 | 21.9 | 2700 |
| Example 3 | 94.3 | 22.6 | 2800 |
| Example 4 | 92.9 | 25.8 | 2600 |
| Comparative Example 1 | 63.5 | 49.2 | 7400 |
| Comparative Example 2 | 85.9 | 33.8 | 4300 |
| Comparative Example 3 | 86.5 | 35.4 | 3900 |

From Table 2, it may be seen that the lithium secondary batteries of Examples 1 to 4 using the positive electrode additive of the present disclosure exhibit a higher capacity retention rate, a lower resistance increase rate, and a smaller gas generation amount than those of the lithium secondary batteries of Comparative Examples 1 to 3 that do not use the positive electrode additive of the present disclosure. Therefore, it is verified that the lithium secondary batteries of Examples 1 to 4 have the stable performance at a high temperature, as compared to the lithium secondary batteries of Comparative Examples 1 to 3.

FIG. 2 is a view illustrating a vehicle 300 including a battery pack 200 including the lithium secondary battery 100 of FIG. 1.

Referring to FIG. 2, the vehicle 300 according to an embodiment of the present disclosure may be, for example, an electric vehicle, a hybrid vehicle, or a plug-in hybrid vehicle, and includes the battery pack 200 including the lithium secondary battery 100 according to an embodiment of the present disclosure. The vehicle 300 includes a four-wheeled vehicle and a two-wheeled vehicle. The vehicle 300 operates by receiving a power from the battery pack 200 according to an embodiment of the present disclosure.

While the technology of the present disclosure has been described with reference to embodiments, it may be appreciated by one skilled in the art of the present disclosure or one having ordinary skill in the art of the present disclosure that various modifications and changes may be made to the various embodiments of the present disclosure without departing from the technical scope of the various embodiments of the present disclosure defined in the claims attached herewith. Therefore, the technical scope of the various embodiments of the present disclosure is not limited to the detailed descriptions of the invention herein, but should be determined by the scope defined in the claims.

### [Description of Symbols]

100: Lithium secondary battery
110: Positive electrode
120:Negative electrode
130: Separator
140: Non-aqueous electrolyte
150: Battery case
200: Battery pack
300: Vehicle

## Claims

1. A positive electrode comprising:
a positive electrode active material layer,
wherein the positive electrode active material layer includes a positive electrode active material, a conductive material, a binder, and a positive electrode additive, and
the positive electrode additive includes at least one of a compound of Formula 1 and a compound of Formula 2: 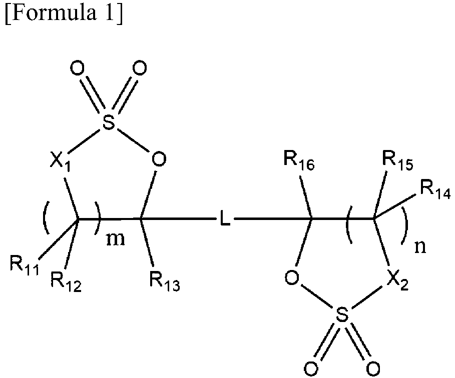
wherein,
X₁ and X₂ are each independently *-O-* or *-C(R_{X1})(R_{X2})-*,
R₁₁, R₁₂, R₁₃, R₁₄, R₁₅, R₁₆, R_{X1}, and R_{X2} are each independently any one selected from H, F, and an alkyl group with carbon numbers 1 to 5,
L is any one selected from a direct bond, a bivalent organic group represented by Formula 1-1, and a bivalent organic group represented by Formula 1-2,
m and n are each independently 1 or 2, and
* is a bonding site 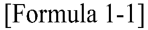 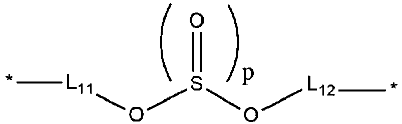
wherein,
L₁₁ and L₁₂ are each independently a direct bond, or an alkylene group with carbon numbers 1 to 5, which is capable of being substituted with one or more fluorines,
p is 1 or 2, and
* is a bonding site, 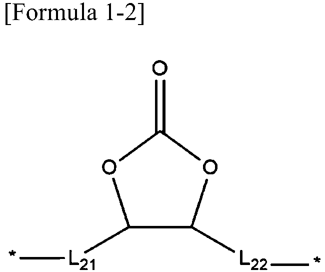
wherein,
L₂₁ and L₂₂ are each independently a direct bond, or an alkylene group with carbon numbers 1 to 5, which is capable of being substituted with one or more fluorines, and
* is a bonding site, 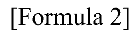 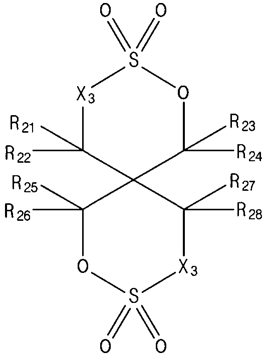
wherein,
X₃ and X₄ are each independently *-O-* or *-C(R_{X3})(R_{X4})-*,
R₂₁, R₂₂, R₂₃, R₂₄, R₂₅, R₂₆, R₂₇, R₂₈, R_{X3}, and R_{X4} are each independently any one selected from H, F, and an alkyl group with carbon numbers 1 to 5, and
* is a binding site.

2. The positive electrode according to claim 1, wherein in Formula 1, L is any one selected from bivalent organic groups of Formula 1-1a, Formula 1-1b, Formula 1-1c, and Formula 1-1d:

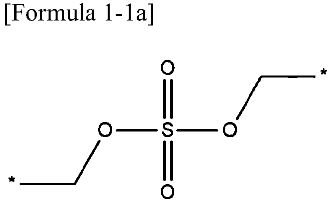

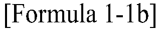

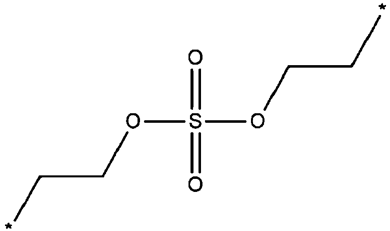

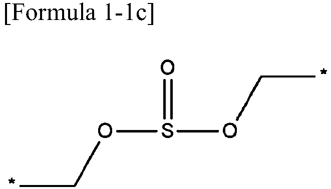

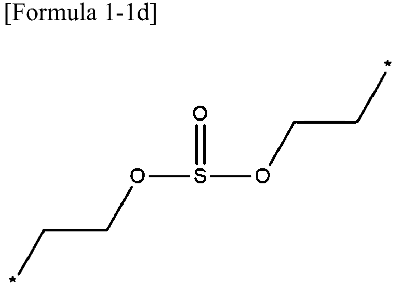

3. The positive electrode according to claim 1, wherein in Formula 1, L is any one selected from bivalent organic groups of Formula 1-2a, Formula 1-2b, and Formula 1-2c:

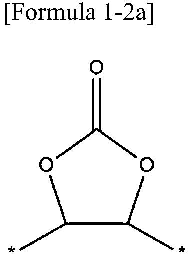

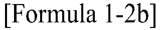

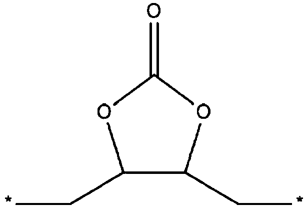

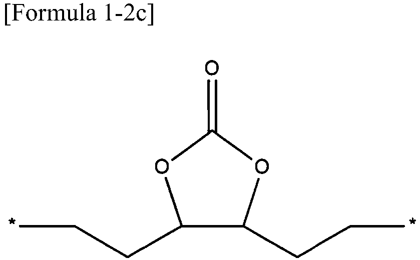

4. The positive electrode according to claim 1, wherein in Formula 1, m and n are each 1.

5. The positive electrode according to claim 1, wherein in Formula 1-1, p is 2.

6. The positive electrode according to claim 1, wherein in Formula 2, X₃ and X₄ are each *-O-*.

7. The positive electrode according to claim 1, wherein in Formula 2, R₂₁, R₂₂, R₂₃, R₂₄, R₂₅, R₂₆, R₂₇, and R₂₈ are each H.

8. The positive electrode according to claim 1, wherein the positive electrode additive is included in a content of 0.001 wt% to 10 wt% based on a total weight of the positive electrode active material layer.

9. The positive electrode according to claim 1, wherein the positive electrode active material includes a lithium transition metal oxide represented by Formula 3:
[Formula 3] LiₐNi_{1-x-y}CoₓM¹_{y}M²_{z}O₂
wherein,
M¹ is Al, Mn, or a combination thereof,
M² is at least one element selected from Zr, Ti, Mg, Ta, Nb, W, Mo, and Cr, and
1.0≤a≤1.3, 0<x<0.4, 0<y<0.4, 0≤z≤0.1, 0.6≤1-x-y<1.0.

10. A lithium secondary battery comprising:
the positive electrode according to claim 1;
a negative electrode; and
an electrolyte.

11. The lithium secondary battery according to claim 10, wherein the electrolyte includes a lithium salt, an organic solvent, and an electrolyte additive.

12. The lithium secondary battery according to claim 11, wherein the electrolyte additive is at least one selected from vinylene carbonate (VC), vinyl ethylene carbonate (VEC), fluoro ethylene carbonate (FEC), propane sultone (PS), propene sultone (PRS), ethylene sulfate (Esa), LiBF₄, lithium difluoro phosphate (LiDFP), lithium difluoro oxalato borate (LiODFB), lithium bis(oxalato) borate (LiBOB), lithium difluoro oxalato phosphate (LiDFOP), and propargyl-1H-imidazole-1-carboxylate.

13. The lithium secondary battery according to claim 11, wherein the organic solvent includes at least one organic solvent selected from a cyclic carbonate-based organic solvent, a linear carbonate-based organic solvent, a linear ester-based organic solvent, and a cyclic ester-based organic solvent.

14. The lithium secondary battery according to claim 10, wherein the negative electrode includes a negative electrode active material layer including a negative electrode active material and formed on a negative electrode current collector, and
the negative electrode active material includes at least one of graphite and SiOₓ (0≤x<2).
